Europäisches Patentamt

European Patent Office

Office européen des brevets

(11) Publication number: **0 197 423**
**B1**

# EUROPEAN PATENT SPECIFICATION

(45) Date of publication of patent specification: **14.06.89**

(51) Int. Cl.⁴: **C 08 F 2/48, C 08 F 2/10**

(21) Application number: **86104062.4**

(22) Date of filing: **25.03.86**

(54) **Method of continuously photopolymerizing water soluble vinyl monomer.**

(30) Priority: **27.03.85 JP 60952/85**

(43) Date of publication of application:
**15.10.86 Bulletin 86/42**

(45) Publication of the grant of the patent:
**14.06.89 Bulletin 89/24**

(84) Designated Contracting States:
**DE FR GB NL SE**

(56) References cited:
**FR-A-1 431 848**
**US-A-3 912 607**

**CHEMICAL ABSTRACTS, vol. 83, no. 24, 15th December 1975, page 30, abstract no. 194126c, Columbus, Ohio, US; & JP - A - 75 103 585 (TOA GOSEI CHEMICAL INDUSTRY CO. LTD.) 15-08-1975**

**The file contains technical information submitted after the application was filed and not included in this specification**

(73) Proprietor: **MITSUBISHI RAYON CO. LTD.**
**3-19, Kyobashi 2-chome Chuo-Ku**
**Tokyo 104 (JP)**

(73) Proprietor: **NITTO CHEMICAL INDUSTRY CO., LTD.**
**No. 5-1, Marunouchi 1-chome Chiyoda-ku**
**Tokyo (JP)**

(73) Proprietor: **Diafloc Co.,Ltd.**
**5-1,Marunouchi 1-chome**
**Chiyoda-ku Tokyo (JP)**

(72) Inventor: **Furuno, Akihisa Nitto Chem. Ind. Co. Ltd.**
**10-1, Daikokucho Tsurumi-ku**
**Yokohama-shi Kanagawa-ken (JP)**
Inventor: **Sugimori, Teruhiko**
**Mitsubishi Rayon Co. Ltd. 20-1, Miyukicho**
**Ohtake-shi Hiroshima-ken (JP)**
Inventor: **Inukai, Ken-ichi**
**Mitsubishi Rayon Co. Ltd. 20-1, Miyukicho**
**Ohtake-shi Hiroshima-ken (JP)**
Inventor: **Habara, Hideaki**
**Mitsubishi Rayon Co. Ltd. 20-1, Miyukicho**
**Ohtake-shi Hiroshima-ken (JP)**

(74) Representative: **Eitle, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

**Description**

Background of the Invention

This invention relates to a method of carrying out continuous polymerization by subjecting an aqueous solution of a water soluble vinyl monomer to irradiation with light to efficiently produce an water soluble polymer having high molecular weight and less residual monomers.

More particularly, it relates to a method of carrying out polymerisation, comprising adding a photoinitiator (i.e. a photopolymerization initiator) to an aqueous solution containing 20 to 90% by weight of a water soluble derivative of acrylic acid or methacrylic acid such as acrylamide, acrylic acid or a salt thereof and dialkylamino(metha)acrylate or a tertiary or quaternary salt thereof, spreading the resultant mixture in predetermined thickness to flow over a continuously forward-moving metallic carrier, a so-called belt, covered over its surface with a light-transmission film to intercept air, and carrying out the polymerization under irradiation with light.

In recent years, there has been increasing demands for water soluble acrylic or methacrylic series polymers or copolymers such as acrylamide, acrylate and a tertiary or quaternary salt of dimethylaminoethyl methacrylate to be used as a coagulating agent for sewage or drainage disposal, an auxiliary agent for paper manufacturing and a polymer for oil recovery.

As a method of preparing these water soluble polymer or copolymers, there has been heretofore employed a reverse phase emulsion polymerisation method in which an aqueous solution of a monomer is dispersed in liquid hydrocarbon, a reverse suspension polymerisation, or a precipitation polymerization method carried out in an organic solvent. However, solvent polymerization in an aqueous system has nowadays become most popular as an industrial method. It is considered to be not only because water is most inexpensive and safest solvent, but also it causes the so-called chain transfer reaction only a little and therefore suited for obtaining a polymer of high molecular weight. Moreover, recently, most of these polymer products are dealt in a market in the form of dried powders taking account of the reduction of transport cost and the problem of handling properties. Accordingly, polymers obtained by the aqueous solution polymerization are dried by any method, mostly by hot-air drying, and thereafter crushed into a product. Namely, the most popular method in the conventional techniques to obtain these polymers comprises the steps of aqueous solution polymerization and hot-air drying.

Thus, in order to obtain a dried powder, it is economically advantageous to carry out the polymerization in concentration as high as possible, and also it is desired to provide a method for its continuous production as the scale of production is enlarged.

On the other hand, although the quality of products is largely influenced by the composition of polymer or copolymer as a matter of course, it is in any event important to prepare polymer having a molecular weight suited for the purpose of their use. In particular, when the products are used as the coagulating agent, the polymer for oil recovery, etc., mentioned above, it has polymer desired to give products having a high molecular weight reaching nearly 10,000,000 and at the same time having good solubility. Also, in view of the environmental preservation, it is one of important items for the quality of the products that they have less residual monomers, and it has been accordingly desired to provide a technique which makes it possible to decrease residual monomers to a level as low as possible.

Under such present state of the arts, U.S. Patents Nos. 3,912,607 and 4,178,221 disclose a continuous polymerization method utilizing ultraviolet irradiation on a moving substrate. In order to increase the concentration of the monomer for the economical reason mentioned above, it becomes a problem to remove the heat developed by polymerisation and to control the reaction. According to these arts, it is possible to effectively carry out cooling from an underside of the substrate, i.e., a belt, and, because of photopolymerization, it is also possible to readily control the reaction by regulating the amount of light. However, in these arts, when the monomers is in high concentration, particualrly in 50% or more, the polymerization proceeds so extremely swiftly that a conventional thermal decomposition type initiator or a · redox initiator can control the reaction only with difficulty or can not achieve the reproducibility.

By the way, as a means for carrying out the photopolymerization mentioned above, U.S. Patent No. 4,178,221 employs a method in which upper surface of the meonomers are covered with inert gas having $O_2$ concentration of 5% or more. Japanese Unexamined Patent Publications No 133287/1978 and No. 136090/1978, disclosing a similar photopolymerization, also generally employ a method in which the surface of polymer solution is covered with $N_2$ gas.

In the polymerization of water soluble vinyl monomers, oxygen generally causes extreme inhibition of the reaction. Particularly, when polymers of high molecular weight are produced, the amount of initiator or the quantity of light must be limited to small and therefore any polymerization does not substantially take place in the presence of oxygen. Accordingly, it is necessary to take any procedures for excluding the oxygen, but there are caused several serious problems if the method utilzing $N_2$ in the conventional continuous photopolymerization is carried out in an industrial scale.

Namely, in the first place, since it is mechanically difficult to bringing a forward-moving belt into perfectly close contact with an upper box, it is impossible to sufficiently exclude the oxygen present in an inner space unless a large amount of nitrogen is always passed. In the second place, when volatile components are present in monomers or in assistant materials, they are accompanied by nitrogen to get scattered out of the system to cause pollution of work environment. Particularly, an acrylamide, which is

2

EP 0 197 423 B1

sublimative, is sublimated along with the heat generation by polymerization to adhere to the surface of glass, thereby obstructing the transmission of light or bringing about a situation that it leaks out of the system together with nitrogen. Since the acrylamide has acute toxicity as so designated as a specified chemical substance, health of operators can not be guaranteed unless a special countermeasure is taken.

To solve such a problem, Japanese Unexamined Patent Publication No. 103585/1975 discloses a method in which a bag is made of a plastic continuous film and photopolymerization is allowed to proceed in the bag. However, this method if also involved in several problems when it is put into practice in an industrial scale. Namely, although it is desirable for substances to be irradiated to have uniform thickness in order to carry out the polymerization, irregularity in quality tends to occur since it is difficult to keep the thickness uniform when such a bag is used. Also, since the plastic film has lower thermal conductivity as compared with a metal, it has a drawback that it is extremely inferior in respect of the heat removal which is a major object when the polymerization is carried out in the form of a thin plate. Moreover, although it is necessary to use films having certain mechanical strength in order to use them for a polymerization vessel, material therefor are limited from view points of the oxygen permeability and so on to make inevitably higher the film cost, whereupon the cost is directly reflected on the cost of products.

Summary of the Invention

The present inventors have made intensive studies on a method for exclusion of oxygen when photopolymerisation is carried out in good controllability on as metallic belt while effecting heat removal, and, as a result, have accomplished this invention.

According to this invention, there is provided a method of carrying out continuous photopolymerisation, comprising adding a photoinitiator to an aqueous solution containing 20 to 90% by weight of a water soluble vinyl monomer, and carrying out the polymerization on a moving carrier under irradiation with light, wherein:

a) said moving carrier is a metallic moving carrier provided on both edges parallel to the moving direction thereof with a pair of flexible belt-like edge-dams with predetermined height;

b) an upper surface of area formed between said pair of edge-dams is covered with a light-transmissive film; amd

c) a space defined by the metallic carrier, the pair of edge-dams and the film is filled with said aqueous solution of the monomer to carry out the irradiation with light from upper surface of the film.

Brief Description of the Drawing

Fig. 1 shows a production apparatus used for practicing the method of this invention;

Fig. 2 shows an enlarged sectional view taken along the line A—A' in Fig. 1; and

Fig. 3 shows a sectional view of a production apparatus used in a comparative example.

Description of the Preferred Embodiments

According to the method of this invention, the polymerization cam be readily carried out only by simply placing a light-transmissive film which is as thin as about to 10 to 30 μm and made of a material having low oxygen transmission, such as polyester and nylon, no flexible belt-like edge-dams provided on a belt, and hold it down lightly. The monomer solution, which is fed so as to be filled in the space defined by the film, the belt and the edge-dams, has viscosity to a certain extent. Accordingly, it is hardly liable that the monomer solution leaks out from the gaps between the film and the edge-dams. Moreover, although it has been necessary for the belt to be kept horizontal in sufficiently high precision when the nitrogen sealing method shown in the prior art is carried out, no particular care is required in this respect when the method of this invention is carried out. However, it is preferred that a monomer solution-feeding section is designed to be slightly declined toward the moving direction to prevent the monomer from flowing back. It is also preferred that this feeding section only is provided with a cover usually made of a material such as plastics and metals to cover the surface of monomer solution with nitrogen stream. In this connection, although it is important in order to prevent inhibition of the polymerization that the starting monomer solution itself has been deoxidized, it is unnecessary to wholly cover the belt with nitrogen since such an object can be achieved by usually carrying out nitrogen substitution.

As the metallic carrier mentioned in this invention, a belt made of stainless steel may be generally used, without, however, being particularly limited thereto. Surface of the metal may be coated with a fluororesin so that release of a resultant polymer may be readily effected. To release the polymer, it is preferable to sufficiently smoothen the surface of the belt, or the surface may be coated or sprayed with a so-called release agent generally available.

As the metallic carrier mentioned in this invention, a belt made of stainless steel may be generally used, without, however, being particularly limited thereto. Surface of the metal may be coated with a fluororesin so that release of a resultant polymer may be readily effected. To release the polymer, it is preferable to sufficiently smoothen the surface of the belt, or the surface may be coated or sprayed with a so-called release agent generally available.

The flexible belt-like edge-dams may include, for example, a pair of rubber rods each having a section of several 10 mm square, which may be used by placing each of them on the upper surface of the belt along both of the longitudinal sides, respectively. Of course, it is desirable to use the edge-dams by bonding them

3

to the belt in an integral form. As the material for the rubber rod, natural rubber and every kind of synthetic rubber may be mentioned, but, in view of lower oxygen permeability and less reaction inhibition, it is preferable to use vulcanized butyl rubber. Height of the rubber edge-dams defines thickness of a layer of the monomer solution. Accordingly, if it is made excessively larger, removal of heat generated by the polymerization will be made difficult. Also, at the same time, the amount of incident light at an upper area in the layer of the monomer solution will become different from that at a lower area thereof to cause irregularity in the progress of polymerization. On the contrary, if the thickness is too small, the rate of production of the polymer per unit area of the stainless steel belt will be lowered. Considering the balance of the above, it is preferred that the rubber edge-dam has the height of about 5 to 50 mm, in general.

For the plastic film to cover the surface, a light-transmissive film may be used, preferably, a film having low oxygen permeability. It is also desirable to select it taking into consideration the thermal resistance. For example, in a case of hompolymerization of methacryloyloxyethyltrimethyl ammonium chloride, polyethyleneterephthalate (PET) of as thin as in thickness of 15 μm can be used, since this homopolymerization is relatively less suffered from inhibitory action of oxygen. Also. However, when acrylamide is copolymerized with it, it is desirable to use a film of 25 μm or more thick or to use a film made of material having still lower oxygen permeability if a film of about 15 μm thick is used.

More specifically, the light-transmissive film is preferably a film having the light transmission of 70% or more at 365 nm, and the oxygen permeability of 1,000 $cc/m^2 \cdot 24$ hr·atm or less at 25°C in a dried state. In general, it may include, for example, a 25 μm film such as PET and nylon or a film obtained by laminating polyvinylidene chloride on polypropyrene or polyvinyl formal.

As a holder to hold down the film on the rubber edge-dams, several means may be exemplified. For example, a V-belt may be further placed on the film and held down by a number of small pulleys, thereby readily achieving the object.

The vinyl monomer to be polymerized according to the polymerization method of this invention may be any of those which are grouped in water soluble vinyl monomers, but, in particular, the method of this invention can be preferably applied to acrylic and/or methacrylic water soluble monomers. Such acrylic or methacrylic water soluble monomer may include, for example, acrylamide, methacrylamide, acrylic acid, methacrylic acid and alkali metal salts or ammonium salts of these acids. It further may include various kind of dialkylaminoalkyl ester of acrylic acid or methacrylic acid and tertiary salts and quaternary salts of these, or N-(dialkylaminoalkyl)acrylamide, N-(dialkylaminoalkyl)methacrylamide and tertiary salts, quaternary salts or dialkyldiallylammonium salts of these. In particular, sulfates ot methyl chloride quaternary compounds of dimethylaminoethylmethacrylate are important examples because homopolymers or copolymers thereof with acrylamide give important polymers useful as a dehydrating agent for sludge from organic waste water such as drainage. As for the composition of the monomer polymerizable in accordance with the method of this invention, the above monomers may be used alone or in combination as a matter of course, but, as far as they give a uniformly mixed aqueous solution of monomers, they can be copolymerized if other copolymerizable vinyl monomers are contained within the range of less than 50% by weight based on total amount of the monomers. Such copolymerizable monomers may be exemplified by acrylonitrile or N-substituted derivatives of acrylamide.

As for the concentration of the monomer solution, the higher it is, the better it is in view of the productivity and the drying efficiency, but it is only limited from a viewpoint of the controlling of the heat of polymerization and the properties of resultant products. For example, when a salt of aminoalkyl-methacrylate is polymerized, it may be copolymerized in monomer concentration of as high as 80% or more as it has small exotherm per weight of the monomer. In this case, drying can be carried out very easily since the resultant polymer mass is in glassy form at room temperature. On the other hand, when acrylamide or acrylate is polymerized, which has large exotherm, it is preferable to carry out the polymerization in monomer concentration of 20 to 50% of the total monomers in order to obtain polymers having high molecular weight and good solubility. In summary, in the method of this invention, it is required that the polymerization is carried out by having the vinyl monomers contained in an aqueous solution in concentration ranging between 20 and 90% by weight.

On the other hand, as the photoinitiator, there may be used those which are soluble in the monomer solution, selected from benzoins and alkyl ethers thereof, benzyl ketals benzophenones and derivatives thereof, anthraquinones and derivatives thereof, azo compounds, etc. which are generally called as a photoinitiator or a photosensitizer. Specific examples of these are benzoin; benzoin alkyl ethers such as benzoin methyl ether, benzoin ethyl ether, benzoin iso-propyl ether and benzoin butyl ether; benzyl ketals such as benzyl dimethyl ketal and benzyl-di-β-methoxyethyl acetal; benzophenones such as benzophenone, methyl o-benzophenone, Michler's ketone, 1-hydroxycyclohexylphenyl ketone, 2-methyl[4-methyllthio)-phenyl]-2-morpholino-1-propane and 4,4'-diethylaminobenzo-phenone; acetophenones such as acetophenone, 4'-isopropyl-2-hydroxy-2-methyl-propiophenone and 2-hydroxy-2-methyl-propiophenone; anthraquinones such as anthraquinone, 2-ethylanthraquinone, sodium anthraquinone-α-sulfonate and sodium anthraquinone-β-sulfonate; and azo compounds such as 2,2'-azobis(2-amidinopropane)-hydrochloride, 4,4'-azobis-4-cyanopentanoic acid.

Also, a combination of a dye and a weak reducing agent may be used under irradiation of visible light when polymerizing acrylamide. Such dye may include, for example, methylene blue, sodium riboflavine-1-phosphate. The reducing agent may include, for example, triethanolamine, L-ascorbic acid or its salt, sodium formaldehyde sulfoxylate. In combined use of the dye and the reducing agent, the amount thereof may be optionally determined in relation to the reactivity of monomer, the desired reaction rate and so on.

Most preferably, in the method of this invention, a method in which a lower alkyl ether of benzoin is dissolved as the photoinitiator is concentration of 10 to 1000 ppm based on the total system, followed by irradiation with ultraviolet rays.

As the light used for irradiation, light of wide wave range of from ultraviolet to visible light may be used depending on the kind of photoinitiators mentioned above. Preferably, it is better to use light having dominant wavelength at a region between 250 and 500 nm. As a light souce therefor, a mercury lamp or a fluorescent chemical lamp called an actinic lamp are suitable.

The belt may be optionally cooled by a water-cooling or air-cooling system as necessary. Polymers formed are removed from the belt at the end of the belt and thus removed polymers are treated by conventional after-treatment methods depending on its purposes to produce various products. As after-treatment methods, there may be used, for example, a method in which cutting, crushing and drying are carried out to produce dried powder, a method in which cutting and crushing are carried out to form grains having diameter of several mm and then formed into gel-like products.

## Examples

This invention will be described below in greater detail by referring to Examples, wherein the measurement of properties of the products obtained in Examples was carried out in the manner mentioned below. Meanwhile, since this invention is a method for polymerization, shape of the products may not be particularly limited to a dried powder. However, samples for the polymer were obtained as dried powders because the measurement of residual monomers of AAm (acrylamide) is carried out usually by use of a powdery product.

### 1. Viscosity of 1% solution in salt water:

A 1% aqueous solution of a dried powder is prepared in amount of 500 ml. and 5.85 g (corresponding to 0.2 N) of sodium chloride is added to the solution and dissolved therein. Thereafter, the viscosity of the solution is measured at a rotor revolution number of 6 r.p.m. by use of a Brookfield type viscometer.

### 2. Solubility:

After 0.5 g of dried powder haivng been sieved through a 16 mesh screen is stirred for two hours in 500 ml of pure water until dissolved therein, it is spread over a 80 mesh sieve, and unpassed fractions, if any, are washed several times with pure water. When the water-containing powder remaining on the sieve is 15 g or less, the powder is deemed to have come up to the solubility standard.

### 3. Residual acrylamide monomer:

TIR—171 method (a gas chromatography).

3 g of dried powdery sample are extracted with shaking by use of 30 ml of an extraction solvent for 24 hours, and then AAm is determined by a gas chromatogram at 170°C with use of a column (3 mm × 1 m) of Chromosolve 101 (sold by Merck & Co.). Results are shown in terms of % by weight of the residual AAm in the dried powder.

As an attraction solvent, a solvent of methanol:water=80:20 (v/v) is used in the case of an nonionic or. anionic polymer, and a solvent of acetone:water=80:20 (v/v) in the case of a cationic polymer.

## Example 1

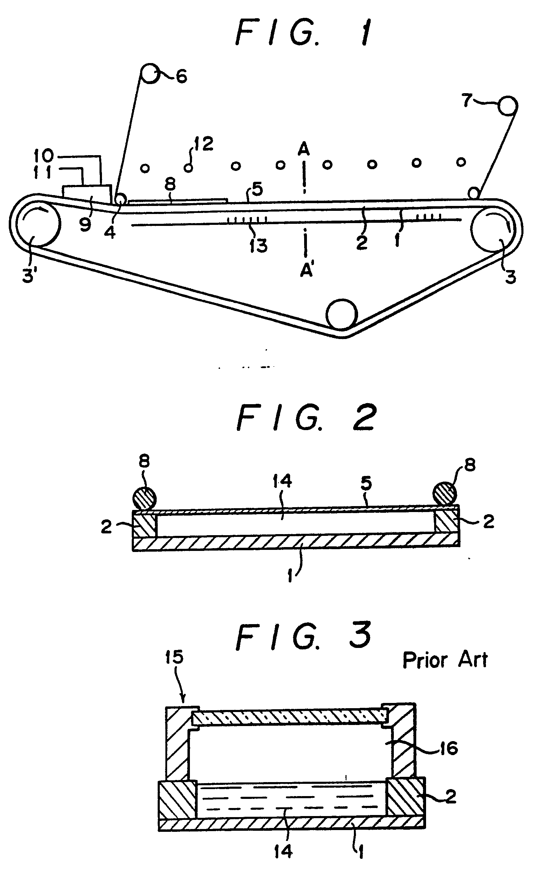

Using a stainless steel belt of 0.3 mm thick and 500 mm wide, a reaction apparatus like a belt conveyor as shown in Fig. 1 and Fig. 2 was produced. Distance between rollers 3 and 3′ was about 3 meters. At the position about 50 cm distant from the uppermost part of the belt, a hold-down roller 4 was provided to hold down the belt so that these rollers may be arranged in such a manner that the monomer-feeding area of about 50 cm was slightly inclined foward and a remaining area beyond that area was kept substantially horizontal up to an end of the belt. To both sides along the moving direction of the stainless steel belt, square rubber rods 2 having a section of about 20 mm square were bonded to provide edge-dams. Also, a polyester film 5 of 25 μm thickness (oxygen permeability: 70 cc/m²·24 hr·atm.; light transmission at 356 nm: 93%) of about 60 mm wide was provided from a film roll 6 by allowing it to pass through the hold-down roller 4. This film was brought into close contact with the square rubber rods 2, extending over about 80 cm from the position of the hold-down roller 4, by means of hold-down members 8 having substantially the same width as the rubber rods. Further, a nitrogen box 9 made of an acrylic resin board was put on the upper area side of the hold-down roller 4, and nitrogen was fed to the box through a nitrogen-feeding pipe 10, while monomer solution 14 was fed thereto through a monomer-feeding pipe 11. As the monomer solution, there was used a solution prepared by mixing the starting materials mentioned below, adjusting the pH of the mixture obtained to 3.5 by use of a small amount of 2N sulfuric acid, deoxygenating it by blowing of nitrogen, and then regulating the solution temperature to 30°C.

| 80% aqueous solution of methacryloyloxyethyltrimethylammonium chloride | 200 kg |
|---|---|
| 5% ethanol solution of benzoine ethyl ether | 0.4 kg |
| 2% aqueous solution of EDTA — 2 Na salt | 0.5 kg |

The stainless steel belt was driven at the rate of 12.5 cm/min, and the monomer solution was fed through means of a quantitative pump. Flux of the pump was adjusted to select the flow amount at which the space defined by the stainless steel belt, the rubber edge-dams and the film was just filled with the monomer solution, and were kept constant at about 1.15 l/min.

Over the area extending from a down area side of the hold-down roller 4 to an end portion of the belt, 20 W fluorescent chemical lamps (actinic lamps) 12 were arranged about 20 cm above the film at intervals of 20 cm and at right angles to the direction of the belt, and then ultraviolet irradiation was carried out with the intensity of 20 $W/m^2$ input at the light-receiving face. Also, cooling was carried out by blowing compressed air against the undersurface of the belt through means of nozzles 13.

By use of a non-contact radiation thermometer, temperature of the surface of the film 5 was measured to find that heat was being generated at the position 25 cm downstream of the hold-down roller 4, and showed a peak value of 89°C at the position of 120 cm downstream of the same. The surface temperature was gradually lowered at an area which is ahead of that position, but, in order to further decrease residual monomers, the ultraviolet irradiation at 20 $W/m^2$ was continued up to a position near the end of the belt.

At a position near the end of the belt, firstly the film was readily peeled from the polymer by the action of the tension of a wind-up roller 7. Secondly the polymer formed in a plate was naturally peeled at an upside of a roller 3 and extruded in the moving direction of the belt.

The plate-like polymer thus obtained was roughly crushed after cooling, dried with hot air of 80°C, and further crushed to have a particle diameter of 1 mm or less to make a product.

Quality of the product was measured according to the test methods mentioned above to give the following:

| Viscosity of 1% solution in salt water: | 170 mPas (170 cps) |
|---|---|
| Solubility: | within the standard |

Example 2

Starting materials shown below were mixed, and the mixture obtained was adjusted to have the pH 4.0 as a whole with 2N sulfuric acid, and then regulated to have the temperature of 30°C while deoxygenating it by blowing nitrogen.

| 80% aqueous solution of methacryloyloxyethyltrimethylammonium chloride | 100 kg |
|---|---|
| Acrylamide (crystal) | 53.3 kg |
| 5% ethanol solution of benzoine ethyl ether | 0.325 kg |
| 2% aqueous solution of EDTA — 2 Na salt | 0.400 kg |
| 5% aqueous solution of ammonium phosphite | 2.460 kg |
| ion exchanged water | 5.6 kg |

Weight ratio of quaternary salt monomer to acrylamide was 60:40, and the total monomer concentration was 82.3%. In the polymerization apparatus (Fig. 1) used in Example 1, the area to be irradiated with light, downstream of the hold-down roller 4, was divided into three sections, and the height and the density (i.e., number) of lamps in the respective sections were changed and adjusted in such a manner that a first section extended up to the position of 10 cm from the hold-down roller 4 and received an incident light amount of 20 $W/m^2$; a second section, extended 180 cm from the end of the first section, an incident light amount of 1 $W/m^2$; and a last (third) section, about 50 cm from the end of the second section to the point where the film is peeled off, an incident light amount of 50 $W/m^2$. Light-shielding plates were set up between the respective sections to prevent light from entering from other sections. Lamps used were 20 W fluorescent chemical lamps similiar to those used in Example 1. Cooling was also carried out by spraying cooling water of 30°C from the underside of the stainless steel belt through means of nozzles 13.

As the film 5, there ws used polyvinyl formal film of 15 μm thick (oxygen permeability: 2 $cc/m^2 \cdot 24$ hr·atm.; light transmission at 365 nm: 88%) coated with polyvinylidene chloride. The stainless steel belt was drive at the rate of 5 cm/min, and the monomer solution was fed through means of a quantitative pump while feeding nitrogen to the nitrogen box. Feeding rate to be matched to the driving rate of the stainless steel belt was about 400 ml/min. Surface temperature of the film 5 showed clear rise-up in the vicinity of the end of the first section and reached a peak temperature of 97°C at the position about 50 cm backward of the end of the second section, but weak heat generation was again observed due to strong irradiation in the third section. After the film was peeled at the end of the belt, the polymer was readily peeled from the stainless steel belt, and then allowed to stand cooled, whereupon it turned to be in a glassy state. This was roughly crushed, and thereafter dried and further crushed in the same manner as in Example 1 to obtain a dried powdery product. The product had the following properties:

| Viscosity of 1% solution in salt water: | 400 mPas (400 cps) |
| Solubility: | within the standard |
| Residual AAm monomer: | 0.04% |

Further, although the polymerisation was carried out continuously for 24 hours, there was found no problem in the apparatus.

Comparative Example 1

The apparatus used in Example 1 was modified in the following points:

(1) The edge-dam was made to be 20 mm high.

(2) No light transmissive film was used.

(3) The part to be irradiated was covered with an apparatus having a glass plate of 7 mm thick at its upper side as shown in Fig. 3 (at an upper side of a cover 15), to which $N_2$ gas was introduced at the rate of 5 $m^3$/hr so that the upper surface of polymerisation area may stand kept under an $N_2$ atmosphere 16.

The other conditions were made same as those in Example 2 to carry out the polymerization. The polymer thus formed had a thin monomer layer remained on its surface due to the polymerization inhibition by oxygen present mixedly in the $N_2$ atmosphere.

A powdery product was obtained from the resultant polymer in the same manner as in Example 1. The product had the following properties:

| Viscosity of 1% solution in salt water: | 390 mPas (390 cps) |
| Solubility: | 20 g |
| Residual AAm monomer: | 0.92% |

Further, the polymerization was carried out continuously for 24 hours to reveal that after 24 hours acrylamide monomers were adhered by sublimation to the inner surface of the glass for sealing $N_2$, whereupon the light transmission was lowered. Also, it was considered that the sublimed acrylamide monomers leaked out of the system together with $n_2$ gas, thereby having caused the pollution of work environment.

Example 3

The following starting materials were mixed and the pH of the mixture was adjusted to 3.5 by use of sulfuric acid. Further, nitrogen was sufficiently blown into it to remove dissolved oxygen, and, at the same time, the solution temperature was controlled to 20°C. Dimethylaminoethyl methacrylate sulfate and acrylamide were mixed in equal weight ratio, and the concentration of all the monomers was 50%.

| 50% aqueous solution of acrylamide | 50 kg |
| 70% aqueous solution of dimethylaminoethyl methacrylate sulfate | 35.7 kg |
| 5% ethanol solution of benzoin isopropyl ether | 0.20 kg |
| 2% aqueous solution of EDTA — 2 Na salt | 0.15 kg |
| 2% aqueous solution of sodium phosphite | 5.0 kg |
| Ion exchanged water | 9 kg |

Using the apparatus in Example 1, the area to be irradiated with light was divided into two sections in such a manner that a first section extended up to the position of 200 cm from the hold-down roller 4, at which ultraviolet irradiation of an incident light amount of 1 W/$m^2$ was carried out by controlling the arrangement of 20 W fluorescent lamps; and a second section extended from the end of the first section to the end of the belt, at which irradiation of 40 W/$m^2$ was carried out. Cooling was also carried out by spraying cooling water of 20°C against the bottom surface of the stainless steel belt through means of nozzles 13. As a film for the cover, there was used a polyester film of 50 µm thick (oxygen permeability: 46 cc/$m^2$·24 hr·atm.; light transmission at 365 nm: 86%).

The belt was driven at the rate of 3.2 cm/min, and the above monomer solution was quantitatively fed in amount of about 300 ml/min so as to be correspondent to the rate. Temperature of the surface of the film began to rise at the position immediately following the hold-down roller 4, and showed a peak value of 54°C at the position 160 cm ahead therefrom. Thereafter, the surface temperature was gradually lowered, but, in order for the reaction to be completed, strong irradiation of 40 W/$m^2$ was carried out at the second section. A water-containing plate-like polymer gel was pulled at the end of the belt, whereupon the gel was readily peeled from the stainless steel belt. A part of the gel was fractionalized and dried with hot air to measure the properties thereof. Results were as follows:

| Viscosity of 1% solution in salt water: | 750 mPas (750 cps) |
| Solubility: | within the standard |
| Residual acrylamide monomer: | 0.02% |

7

## Example 4

Starting materials shown below were mixed. The pH of the solution obtained was 10.3. In the similar manner to other Examples, deoxygenating was sufficiently carried out by blowing of nitrogen, and, at the same time, the temperature of the solution was controlled to 20°C.

| | |
|---|---|
| 50% aqueous solution of acrylamide | 98 kg |
| 80% aqueous solution of acrylic acid | 1.25 kg |
| 10% aqueous solution of sodium hydroxide | 5.6 kg |
| 2% ethanol solution of benzoin ethyl ether | 0.5 kg |
| 2% ethanol solution of nitrilotripropionic acid | 10.0 kg |
| 2% aqueous solution of EDTA — 2 Na | 0.3 kg |
| Ion exchanged water | 84.4 kg |

The apparatus in Example 1, which was modified to have the same lamp arrangement and the same cooling system (cooling water of 20°C) as in Example 3, using also the same film as used therein, was driven at the driving rate of 5 cm/min. The feeding rate, correspondent thereto, of the moment solution was approximately 460 ml/min.

Generation of heat of the film surface began at the position of 10 cm from the hold-down roller 4, and reached a peak value of 53°C at the position of 130 cm from the same. After the strong irradiation was carried out at the second section, a water-containing polymer gel thus formed was readily peeled from the film and the stainless steel belt at the end portion of the belt. A part of this gel was fractionalized, dried with hot air at 80°C, and further crushed to have a particle diameter of 1 mm or less to obtain a polymer sample.

The product obtained had the following properties:

| | |
|---|---|
| Viscosity of 1% solution in salt water: | 2750 mPas (2750 cps) |
| Solubility | within the standard |
| Residual acrylamide monomer | 0.03% |

## Example 5

Starting materials shown below were mixed. Deoxygenating was sufficiently carried out by blowing of nitrogen, and, at the same time, the temperature of the solution was controlled to 20°C.

| | |
|---|---|
| 50% aqueous solution of acrylamide | 64 kg |
| 80% aqueous solution of acrylic acid | 1.25 kg |
| 10% aqueous solution of sodium hydroxide | 5.6 kg |
| N-vinylpyrrolidine | 17 kg |
| 2% ethanol solution of benzoin methyl ether | 0.5 kg |
| Beta-mercaptopropionic acid | 0.2 kg |
| 2% aqueous solution of EDTA — 2 Na | 0.3 kg |
| Ion exchanged water | 111.15 kg |

The apparatus in Example 1, which was modified to have the same lamp arrangement and the same cooling system (cooling water of 20°C) as in Example 3, using also the same film as used therein, was driven at the driving rate of 2.5 cm/min. The feeding rate, correspondent thereto, of the monomer solution was approximately 230 ml/min.

Generation of heat of the film surface began at the position of 9 cm from the hold-down roller 4, and reached a peak value of 48°C at the position of 135 cm from the same. After the strong irradiation was carried out at the second section, a water-containing polymer gel thus formed was peeled off at the end portion of the belt. A part of the gel was fractionalized, dried with hot air at 80°C, and further crushed to have a particle diameter of 1 mm or less to obtain a polymer sample.

The product obtained had the following properties:

| | |
|---|---|
| Viscosity of 1% solution in salt water: | 500 mPas (500 cps) |
| solubility: | within the standard |

Effect of the invention:

In this invention, a water soluble polymer is obtained by passing a monomer solution to flow in the system of an oxygen excluding means constituted of a metallic moving carrier, a pair of edge-dams and a light-transmissive film. Accordingly, the monomer in the system is under such environment that may be hardly affected by the polymerisation inhibitory action by oxygen, and therefore, it is possible to obtain a water soluble polymer having high polymerisation degree and high molecular weight. Also, it is not necessary at all to incessantly pass nitrogen to exclude oxygen. For this reason, there is no fear that starting materials are scattered out of the system along with nitrogen stream to pollute work environment, even if volatile starting materials are used.

# EP 0 197 423 B1

## Claims

1. A method of carrying out continuous photopolymerisation of water soluble vinyl monomer, comprising adding a photoinitiator to an aqueous solution containing 20 to 90% by weight of a water soluble vinyl monomer, and carrying out the polymerisation on a moving carrier under irradiation with light, wherein:

a) said moving carrier is a metallic moving carrier provided on both edges parallel to the moving direction thereof with a pair of flexible belt-like edge-dams with predetermined height;

b) an upper surface of area formed between said pair of edge-dams is covered with a light-transmissive film; and

c) a space defined by the metallic carrier, the pair of edge-dams and the film is filled with said aqueous solution of the monomer to carry out the irradiation with light from upper surface of the film.

2. The method according to Claim 1, wherein said water soluble vinyl monomer contains 50 to 100% by weight of at least one of acrylic monomer and methacrylic monomer, based on the total amount of the monomer.

3. The method according to Claim 1, wherein said light-transmissive film is a film having the light transmission of 70% or more at 365 nm and the oxygen permeability of 1,000 cc/m$^2$·24 hr·atm. or less at 25°C in a dried state.

## Patentansprüche

1. Verfahren zur Durchführung einer kontinuierlichen Fotopolymerisation eines wasserlöslichen Vinylmonomers, bei dem man einen Fotoinitiator zu einer wäßrigen Lösung, enthaltend 20 bis 90 Gew.-% eines wasserlöslichen Vinylmonomers zugibt, und die Polymerisation auf einen bewegten Träger unter Bestrahlung mit Licht durchführt, bei dem

a) der bewegte Träger ein metallischer bewegter Träger ist, der an beiden Kanten parallel zu deren Bewegungsrichtung mit einem Paar flexibler bandähnlicher Kantendämme mit einer vorbestimmten Höhe ausgerüstet ist;

b) eine obere Oberfläche zwischen dem Paar von Kantendämmen mit einem lichtdurchlässigen Film bedeckt ist, und

c) ein Raum, der durch den metallischen Träger, das Paar der Kantenämme und den Film definiert ist, mit der wäßrigen Lösung des Monomers ausgefüllt ist, um die Bestrahlung mit Licht von der oberen Fläche des Films Vorzunehmen.

2. Verfahren gemäß Anspruch 1, bie dem das Wasserlösliche Vinylmonomer 50 bis 100 Gew.-% wenigstens ein Acrylmonomer und/oder Methacrylmonomer, bezogen auf die gesamte Menge des Monomers enthält.

3. Verfahren gemäß Anspruch 1, bei dem der lichtdurchlässige Film ein Film mit einer Lichtdurchlässigkeit von 70% oder mehr bei 365 nm und einer Sauerstoffdurchlässigkeit von 1000 cm$^3$/m$^2$·24 h·atm oder weniger bei 25°C in trockenem Zustand ist.

## Revendications

1. Procédé de réalisation d'une photopolymérisation continue d'un monomère vinylique soluble dans l'eau, comprenant l'addition d'un photo-amorceur à une solution aqueuse contenant 20 à 90% en poids d'un monomère vinylique soluble dans l'eau et la réalisation de la polymérisation sur un support mobile sous irradiation lumineuse, dans lequel:

a) ledit support mobile est un support mobile métallique muni, sur ses deux bords parallèles à la direction du mouvement, d'une paire de rebords de retenue souples, en forme de courroies, ayant une hauteur prédéterminée;

b) la surface supérieure de la zone fomrée entre ladite paire de rebords de retenue est recouverte d'un film transmettant la lumière; et

c) l'espace défini par le support métallique, la paire de rebords de retenue et le film est rempli de ladite solution aqueuse du monomère, pour que l'irradiation soit réalisée avec la lumière arrivant par la surface supérieure du film.

2. Procédé selon la revendication 1, dans lequel ledit monomère vinylique soluble dans l'eau contient 50 à 100% en poids d'au moins un monomère parmi un monomère acrylique et un monomère méthacrylique, par rapport à la quantité totale du monomère.

3. Procédé selon la revendication 1, dans lequel le film transmettant la lumière est un film ayant une transmission lumineuse supérieure ou égale à 70% à 365 nm et une perméabilité à l'oxyxène inférieure ou égale à 1000 cm$^3$/m$^2$·24 h·atm à 25°C dans un état sec.

## FIG. 1

## FIG. 2

## FIG. 3

Prior Art

1